# EUROPEAN PATENT SPECIFICATION

(11) **EP 2 932 869 B1**
(45) Date of publication and mention of the grant of the patent: **22.02.2017**
(21) Application number: 15159057.7
(22) Date of filing: 13.03.2015
(51) Int. Cl.: B60S 3/06, A46B 3/00, A46B 13/00, A46B 13/02, A46D 3/00

(54) **Brush device for mechanic washing**
Bürstenvorrichtung zum mechanischen Waschen
Dispositif à brosse destiné au lavage mécanique

(30) Priority: 18.03.2014 IT BO20140137
(43) Date of publication of application: 21.10.2015
(73) Proprietor: Morelite S.r.l., 47899 Serravalle (SM)
(72) Inventor: Bernardi Pirini, Fernandino, 46018 Ponteterra (MN) (IT)
(74) Representative: Negrini, Elena

(56) References cited:
- EP-A1- 0 524 153
- KR-B1- 100 919 923

## Description

The present invention refers to the field concerning the mechanized washing, for example automatic or semiautomatic, by roller brushes, particularly of the type in use for vehicles and aircrafts, and refers to a brush device for mechanized washing.

There are known car washes provided with brushes supported by vertical and horizontal rollers or cylinders, for example of metal kind, placed in axial rotation by respective motors. These known brushes are generally constituted by a flat and flexible support, that can be fixed to the cylindrical surface of the respective roller and provided with bristles or other projecting flexible elements that due to the rotation of the roller slide along the surface of the vehicle or of vehicle to be cleaned; the simultaneous sprinkling of water, possibly with detergent, facilitates the cleaning while also reducing the risk of micro abrasions of the surface to be washed.

The bristles or flexible elements are typically made of threads of synthetic material or by terminal fringes of ribbon-shaped bands of expanded synthetic material or felts, fabrics, non-woven fabrics and the like.

A drawback of these known brushes consists in that the fixing of the flexible elements, such as threads and fringed bands, to the respective support is very complex to perform and requires a lot of time by skilled workers resulting very expensive and not free from errors of realization.

Another drawback is that the fixing must be performed at the time of production forcing to store and to transport the bulky brushes already carried out.

Another drawback of the known brushes is that they don't allow at the user, on reasonable terms, to replace the bristles, threads or worn or damaged bands.

Other drawback consists in that the known brushes are homogeneous and do not allow to obtain a cleaning action more intense in certain areas, for example the lower ones of the vehicles.

One object of the present invention is to propose a brush device for mechanized washing whose fringed bands are quickly and safely fixable to the flexible support, and without requiring particular expertise or skill on the part of the assembling worker.

Another object is to propose a device that can be provided, without particular modifications and variations, with single-layer or multi-layer fringed bands obtained, for example by longitudinally bending or folding the bands.

Further object is to propose a device that can be assembled also in the installation place with few and simple tools minimizing the storage and transport costs.

Another object is to propose a device at which can be easily added, also by the user and without removing the device from the respective roller, some fringed bands to restore the functionality compromises by damages or worn of pre-existing bands or to intensify the brush action in particular areas.

The document no. KR 100 919 923, which discloses the preamble of claim 1, discloses a brush for mechanized washing comprising a support means fixable to a roller covering the cylindrical surface, and comprising band means each provided with fringes and fixed by fixing means to the support means. Each fixing means is provided with an elongated body means having at least one protruding arm means.

The document no. EP 0,524,153 discloses a flexible support means for a brush.

The characteristics of the invention are highlighted in the following with particular reference to the accompanying drawings in which:
- Figure 1 shows a partial and plan view of a first band means of the brush device for mechanized washing object of the present invention;
- Figure 2 shows a partial and axonometric view of a flexible support means of the brush device for mechanized washing of the present invention;
- Figure 3 shows an axonometric view of a fixing means of the brush device for mechanized washing of the present invention;
- Figure 4 shows a partial and axonometric view of the brush device for mechanized washing, object of the present invention, in a condition prior to the fixing of the band means of Figure 1 to the support means of Figure 2 by the fixing means of figure 3;
- Figure 5 shows a partial, front and partially sectioned view of the elements of Figure 4 in association with a thrust means for their assembly;
- Figure 6 shows the elements of Figure 5 in an assembled and fixed condition to realize the brush device;
- Figure 7 shows a partial axonometric and transversal sectional view of the device of Figure 6;
- Figure 8 shows the elements of Figure 5 in which the fixing means is carried out according to a first variant of the device;
- Figure 9 shows the elements of Figure 5 in which the fixing means is carried out according to a second variant of the device;
- Figure 10 shows the elements of Figure 5 associated with optional elements of the device;
- Figure 11 shows a partial, axonometric and transversal sectional view of the device of Figure 10 in an assembled condition.

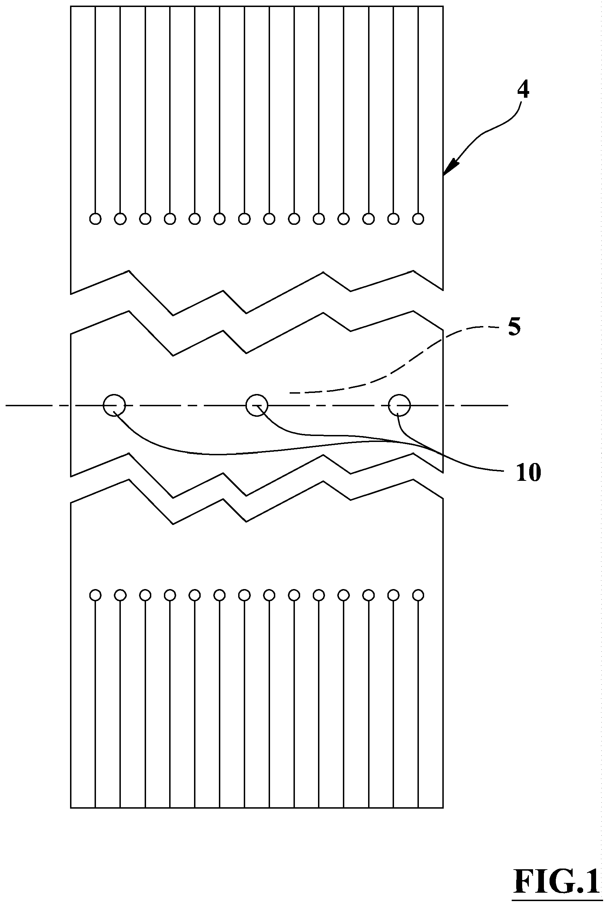

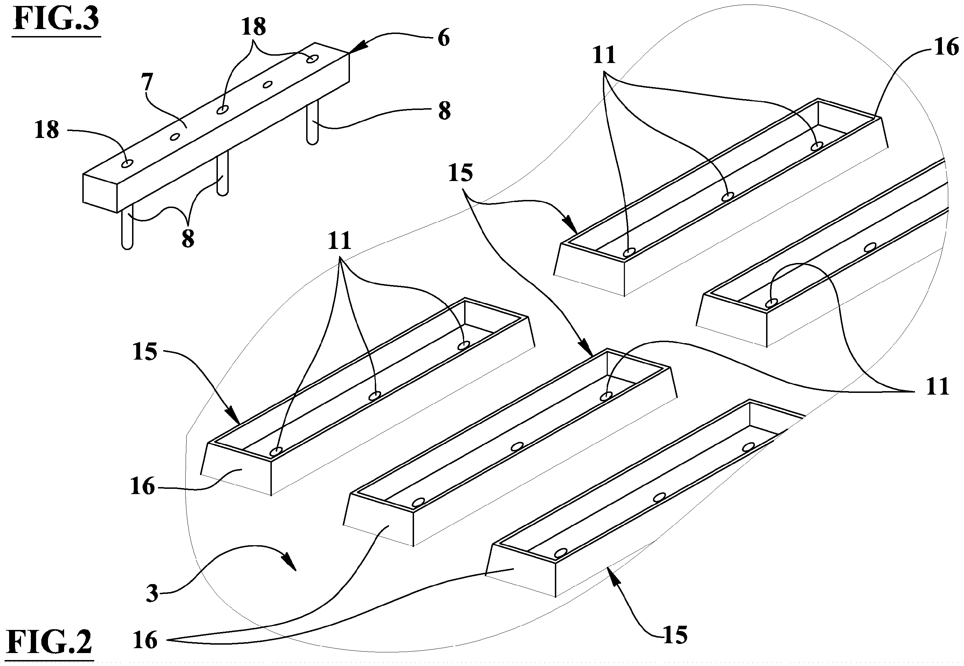

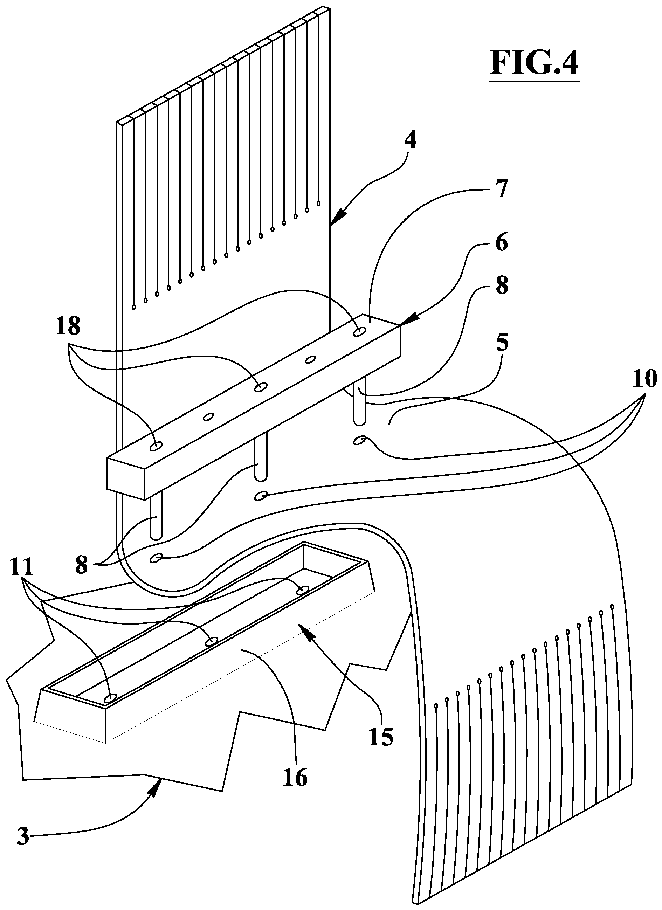

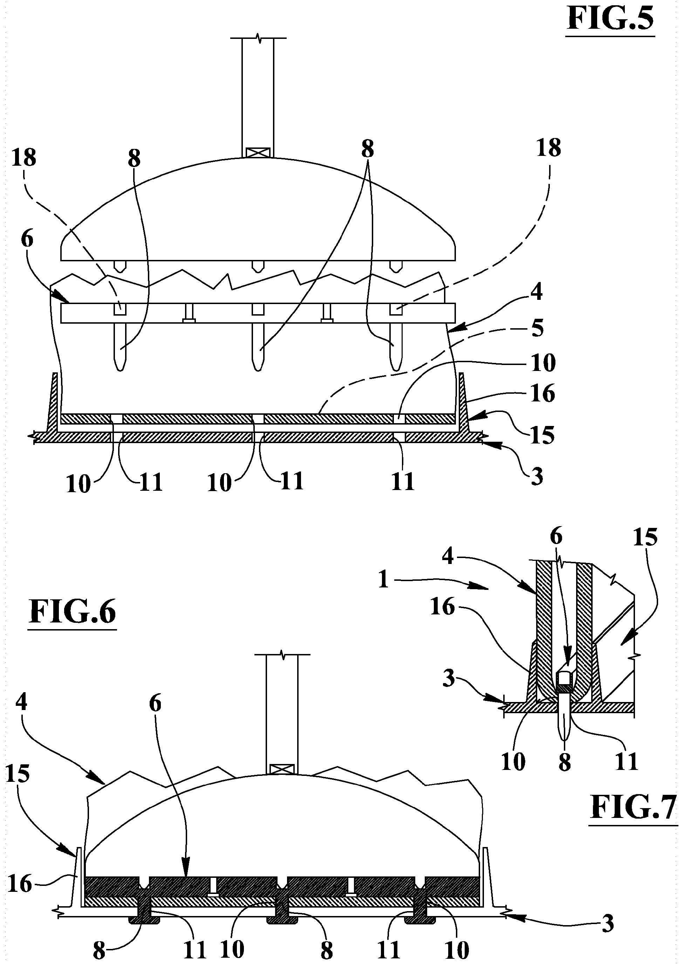

With reference to figures 1-7, 1 indicates the brush device for mechanic washing, object of the present invention, comprising:
- a flexible support means 3 fixable to a respective roller covering the cylindrical surface thereof;
- a plurality of first band means 4 each provided with fringes;
- a plurality of fixing means 6 each assigned to fix at least one of the first band means 4 to the support means 3.

The support means is of rectangular shape with adjacent sides of length equal, respectively, to the height and to the diameter of the roller and is made of flexible plastic material. The fixing of the support means 3 to the roller is made by known means, such as through an upright or rod that lock two opposite sides of the support means to the roller to which is screwed or otherwise fixed.

Each first band means 4 is made of a ribbon, for example, in felt, fabric, non-woven fabric or the like material, preferably of synthetic material of low density, such as closed-cell foam polyethylene, and in general has two long sides and two fringed short sides or rather provided with longitudinal cuts or die-cuttings, therefore parallel to the long sides.

The transverse ends of the band means have therefore some fringes, of length and width determined as a function of the conditions and operational requirements. As shown in the figures, the elements of the fringes are rectangular and adjacent to one another, separated only by the cuts which terminate with respective holes assigned to prevent the propagation of cuts themselves. The cross section of each element of the fringe is rectangular or preferably approximately square, or rather the distance between the cuts is approximately equal to the thickness of the band means 4. Alternatively, the elements of the fringes can be of very elongated triangular shape, with a width that is reduced from the root to the end of each element. In this case the elements of each fringe are mutually separated by triangular die cutting with the vertex at the roots of the fringes.

Each band means 4 can be a single or multiple layers and obtained by a longitudinal fold carried out on the center line of the band means 4 itself to obtain two layers, or by more longitudinal folds to obtain the band means with three or more layers. Each fixing means 6 is provided with an elongated body means 7 having a set of protruding arm means 8, lying on a same geometric plane passing through the longitudinal geometric axis of the body means 7 or close to it.

Preferably the body means 7 is prismatic or cylindrical and bears arm means 8 which, as shown in the figures, can be of elongated cylindrical shape and carried out in thermoplastic plastic in a single piece with the body means 7 itself. Alternatively, the invention provides that the arm means 8 are of click joint type, for example, harpoon, or which consist in screws associated in a freely rotatable manner to the body means or in rivets or screw anchor fixed to the body means or integral to it, for example of the type used in the automotive field.

In the assembled condition of the device 1, the body means 7 of a fixing means 6 is assigned to abut with the transversal median portion 5 of a corresponding first band means 4, with a single-layer or folded in two or more layers, and each arm means 8 of such body means 7 is assigned to engage a respective first pass through hole 10 made in said median portion 5 of said single layer first band means 4 or in a pass through first hole of each of the layers of the first band means. Each arm means 8 is also assigned to engage in a respective second pass through hole 11 made in the support means 3.

In said assembled condition, the lock of each arm means 8 of each fixing means 6, is made by thermoforming of an enlargement or rather of a mushroom head at the projecting end of the arm means. Such thermoforming can be obtained by a shaped sonotrode or through other thermal tools.

In case of arm means of screw or plug type, the fixing is carried out by screwing or expansion of each arm means.

The longitudinal extension of each body means 7 is equal or almost equal to the transversal dimension of a first band means 4 or to integer submultiples of such extension in the case of the first band means is folded in several layers. Alternatively, it is also envisaged that the body means 7 has a longitudinal dimension equal to an integer multiple of the width of the first band means 4 in order to fix more first band means side by side.

The flexible support means 3 is provided with a plurality of seats 15 each having a peripheral wall 16 projecting perpendicularly from the support means 3 and assigned to accommodate the transversal median portion 5 of at least a first band means 4 and a corresponding body means 7; each seat 15 is also provided with a second hole 11 for each arm means 8 of the body means 7. The plan shape of the seats 15 is rectangular and in the assembled and operation condition of the device such seats are parallel to the main geometric axis, i.e. to the rotation axis, of the roller on which is mounted the respective support means 3.

Preferably, and as illustrated in the figures, each fixing means 6 is provided with three arm means 8, the transversal median portion 5 of each first single or folded band means 4 is provided with three first holes 10 or a multiple of three and each seat means 15 is provided with three second holes 11 where said arm means 8 and holes 10, 11 are placed on the same mutual distances. In general, the arm means 8 of a body means, and the corresponding holes or groups of holes, can vary from one up to a dozen or more, depending on the dimensioning and requirements.

The transversal dimension of each seat means 15 is approximately equal to the transversal dimension of the body means 7 added of the twice of the thickness of the first band means 4 and added twice the thickness of the first band means 4 for each of its longitudinal fold. In this way, the portions close to the seat means of the two side edges of each first band means are almost radial with respect to the roller.

The face of the body means 7 opposite to the arm means 8 bears a set of concavity 18, for example in the form of blind holes, assigned to removably house respective teeth of a thrust means, for example manually actuated or actuated by a pneumatic actuator, assigned to thrust the arm means 8 in the first 10 and second 11 holes and to translate at the same time the body means 7 and the transversal median portion 5 of the first band means 4 towards and against the bottom of the seat means 15 until the fixing of the arm means 8 to the support means 3.

The operability of the brush device for mechanized washing provides that it is assembled at the factory or at the installation site and which is put in place on the washing motorized roller. It should be noted that the radial orientation of the roots of the band means provides a cleaning action, surprisingly more effective than that of known devices.

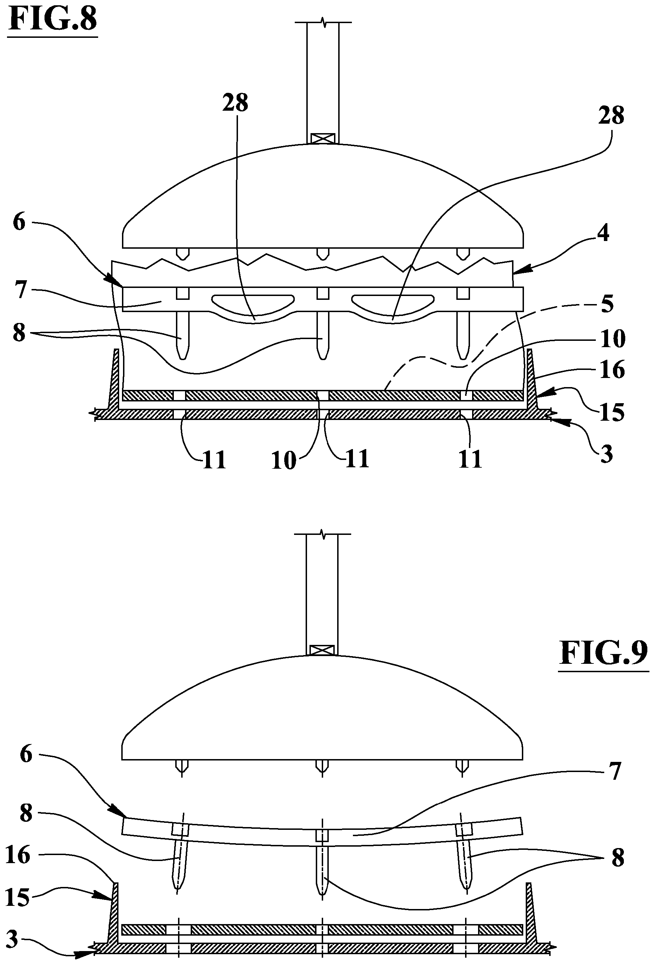

In the variant of figure 8, the fixing means 6 is provided with a plurality of resilient means 28 fixed to or formed in the respective body means 7 between its arm means 8 and/or laterally to those of them 8 more external. Such resilient means can be, for example bridge or undulation shaped, or the like and allow to maintain the arm means in elastic tension, even after years of work. Alternatively are also provided resilient means, not shown, interposed between the body means 7 and its arm means 8 and assigned, in the operative condition, to allow an elastic certain limited movement of the body means.

In the variant of Figure 9 the body means 7 of the fixing means 6 is resilient and is curved, leaf spring shaped, with the face bearing his arm means 8 concave or convex shaped. In this variant the side arm means 8 are divergent with respect to the central one, for such reason, the first 10 and second 11 side through holes are not circular but they are in the shape of transversal slot to allow the passage of the side arm means 8 and their orientation parallel to the central arm means during the fixing. Such variant allows limited elastic settlement movements to the body means and to the first band means.

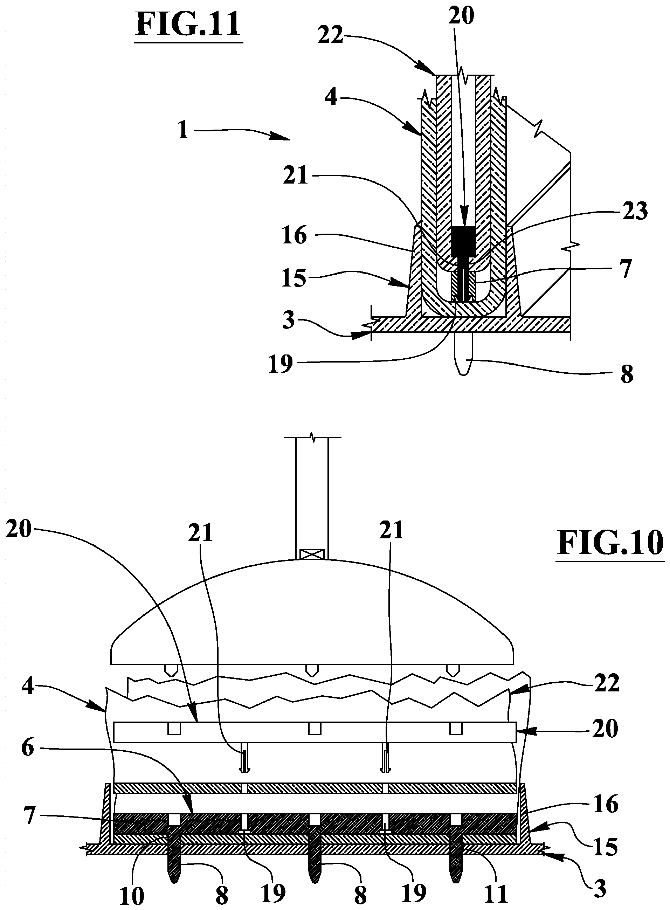

The variant of Figures 10 and 11 provides that the body means 7 of each fixing means 6 is provided with a plurality of first lock means 19.

Furthermore, such variant of the device comprises a set of connection means 20 each with a plurality of second lock means 21, each complementary and lockable to a respective first lock means 19 of a fixing means 6. Such variant also includes a set of second fringed band means 22, each provided with a plurality of third holes 23 each for a respective second lock means 21 of a connection means 20. The second band means 22 can be identical to the first band means 4 or different type. Each first lock means 19 consists of a cavity with an undercut assigned to click joint engage a projecting shoulder made in a rod of a second lock means 21. Such variant allows to restore or increase the cleaning capability of the device in damaged areas or assigned to act on particularly dirty portions of objects to be cleaned, for example, on the area of the mudguards of the car. Such restores and increasing can be easily made by users of the device without disassembly it from the roll, in an extremely simple fast way, and without special tools.

An advantage of the present invention is to provide a brush device for mechanized washing which fringed bands are quickly and safely fixable to the flexible support, and without requiring particular expertise or skill of the worker assigned to the assembly.

Other advantage is to provide a device that can be equipped, without particular modifications and variations, with fringed bands of single-layer or multi-layer obtained, for example, longitudinally bending or folding the bands.

Further advantage is to provide a device that can be assembled also in the place of installation with a few simple tools minimizing the costs of storage and transport.

Other advantage is to provide a device to which can be easily added, also by the user and without removing the device from the respective roller, the fringed bands to restore the functionality compromised by damage or wear of the pre-existing bands or to intensify the brushing action in particular areas.

Further advantage is to furnish a device able to provide an elastic fixing of the bands that can prevent and recover fixing plays avoiding wears, looseness and/or damages of the fixing zones of the bands.

## Claims

1. Brush device for mechanic washing comprising a flexible support means (3) that can be fixed to a respective roller to coat the cylindrical surface of said roller, and comprising a plurality of first band means (4) each provided with fringes; said device comprises a plurality of fixing means (6) each assigned to fix at least one of the first band means (4) to the support means (3) and each of said fixing means (6) is provided with an elongated body means (7) having at least a protruding arm means (8); in the assembled condition of the device (1), the body means (7) of a fixing means (6) is assigned to match with the transversal median portion (5) of a corresponding first band means (4) and each arm means (8) of said body means (7) is assigned to engage a respective first pass through hole (10) made through said transversal median portion (5) of said first band means (4) and to engage a respective second pass through hole (11) made through the support means (3); where, in said assembled condition, each arm means (8) of each fixing means (6) is locked to the support means (3); said device being **characterized in that** the flexible support means (3) is provided with a plurality of housings (15) each having a perimeter wall (16) protruding perpendicularly to the support means (3) and assigned to accommodate the transversal median portion (5) of at least a first band means (4) and to accommodate a corresponding body means (7); each housing (15) is also equipped with of a second hole (11) for each arm means (8) of the body means (7); the side of the body means (7) opposed to the arm means (8) has a set of concavity (18) assigned to removably house respective teeth of a thrust means for pushing the arm means (8) into the holes first (10) and second (11) and for translating the body means (7) and the transversal median portion (5) of the first band means (4) toward and against the bottom of the housing means (15) as long as the fixing of the arm means (8) to the support means (3) is carried out.

2. Device according to claim 1 **characterized in that** the longitudinal extension of each body means (7) is equal or almost equal to the transverse dimension of a first band means (4) or to integer submultiples or multiples of said dimension and **in that** it comprises a plurality of protruding arm means (8) lying on the same geometrical plane passing through the longitudinal geometric axis of the body means (7) or close to it.

3. Device according to claim 1 **characterized in that** the body means (7) of each fixing means (6) is prismatic o cylindrical shaped and it (7) is provided with three arm means (8), the transversal median portion (5) of each first band means (4) is provided with three first holes (10), and optionally of further three first holes (10) per each of its longitudinal fold, each housing means (15) is provided with three second holes (11) where said arm means (8) and holes (10, 11) are placed on the same mutual distances.

4. Device according to any of the preceding claims **characterized in that** the transverse dimension of each housing means (15) is approximately equal to the transverse dimension of the body means (7) plus twice the thickness of the first band means (4) more twice the thickness of the first band means (4) for each longitudinal fold.

5. Device according to any of the previous claims **characterized in that** the fixing means (6) is provided with a plurality of resilient means (28) fixed to, or formed in, the respective body means (7) between its arm means (8) and/or laterally to the outer of them (8).

6. Device according to any of claims 1 - 4 **characterized in that** the body means (7) of the fixing means (6) is resilient and is curved, with the face having its arm means (8) concave or convex shaped.

7. Device according to any of the previous claims **characterized in that** the body means (7) of each fixing means (6) is provided with a plurality of first lock means (19) and **in that** said device (1) comprises a set of connection means (20) each provided with a plurality of second lock means (21) each complementary shaped and lockable to a respective first lock means (19) of a fixing means (6) and the device (1) comprises a set of fringed second band means (22), each provided with a plurality of third holes (23) each for a respective second lock means (21) of a connection means (20).

8. Device according to claim 7 **characterized in that** each first lock means (19) consists of a cavity having an inner undercut assigned to click joint engage a protruding shoulder carried out in a stem of a second lock means (21).

## Patentansprüche

1. Bürstenvorrichtung zum mechanischen Waschen, umfassend
ein flexibles Unterstützungsmittel (3), das an einer entsprechenden Walze befestigt werden kann, um die zylindrische Oberfläche der Walze zu ummanteln, sowie eine Mehrzahl von ersten Bandmitteln (4), die jeweils mit Fransen bereitgestellt sind, wobei
die Vorrichtung eine Mehrzahl an Befestigungsmitteln (6) aufweist, die jeweils zugeordnet sind, um mindestens eines der ersten Bandmittel (4) an dem Unterstützungsmittel (3) zu befestigen und jedes der Befestigungsmittel (6) ist mit einem länglichen Körpermittel (7) bereitgestellt, das mindestens ein vorstehendes Armmittel (8) umfasst, wobei
im zusammengebauten Zustand der Vorrichtung (1), das Körpermittel (7) eines Befestigungsmittels (6) zugeordnet ist, um mit dem querverlaufenden Mittelbereich (5) eines entsprechenden ersten Bandmittels (4) zusammenzupassen, und jedes Armmittel (8) des Körpermittels (7) ist zugeordnet, um mit einem entsprechenden ersten Durchgangsloch (10) in Eingriff zu stehen, das durch den querverlaufenden Mittelbereich (5) des ersten Bandmittels (4) hindurch erzeugt wurde, und um mit einem entsprechenden zweiten Durchgangsloch (11) in Eingriff zu stehen, das durch das Unterstützungsmittel (3) hindurch erzeugt wurde, wobei,
im zusammengebauten Zustand, jedes Armmittel (8) von jedem Befestigungsmittel (6) am Unterstützungsmittel (3) verriegelt ist, und die Vorrichtung ist **dadurch gekennzeichnet, dass**
das flexible Unterstützungsmittel (3) mit einer Mehrzahl an Gehäusen (15) bereitgestellt ist, die jeweils eine Umfangswand (16) aufweisen, die senkrecht zum Unterstützungsmittel (3) vorsteht, und die zugeordnet sind, um den querverlaufenden Mittelbereich (5) von mindestens einem ersten Bandmittel (4) sowie ein entsprechendes Körpermittel (7) aufzunehmen, wobei
jedes Gehäuse (15) ebenso ausgestattet ist mit einem zweiten Loch (11) für jedes Armmittel (8) des Körpermittels (7), während
die Seite des Körpermittels (7) entgegengesetzt dem Armmittel (8) einen Satz an Konkavitäten (18) aufweist, der zugeordnet ist, um entsprechende Zähne eines Druckmittels zum Drücken des Armmittels (8) in die ersten (10) und zweiten Löcher (11) entfernbar aufzunehmen sowie zum Verschieben des Körpermittels (7) sowie des querverlaufenden Mittelbereichs (5) des ersten Bandmittels (4) in Richtung und gegen den Boden des Gehäusemittels (15), solange das Befestigen des Armmittels (8) am Unterstützungsmittel (3) ausgeführt wird.

2. Vorrichtung gemäß Anspruch 1, **dadurch gekennzeichnet, dass** die Längserstreckung von jedem Körpermittel (7) gleich oder nahezu gleich der Querabmessung eines ersten Bandmittels (4) oder der ganzzahligen Bruchteile oder Vielfachen der Abmessung ist sowie dadurch, dass sie eine Mehrzahl von vorstehenden Armmittel (8) aufweist, die auf derselben geometrischen Ebene liegen, die durch die geometrische Längsachse des Körpermittels (7) oder nahe dazu verläuft.

3. Vorrichtung gemäß Patentanspruch 1, **dadurch gekennzeichnet, dass** das Körpermittel (7) jedes Befestigungsmittels (6) prismatisch oder zylindrisch geformt ist und das Körpermittel (7) ist bereitgestellt mit drei Armmitteln (8), wobei der querverlaufende Mittelbereich (5) jedes ersten Bandmittels (4) mit drei ersten Löchern (10) bereitgestellt ist, sowie optional mit weiteren drei ersten Löchern (10) für jede seiner Längsfalten, während jedes Gehäusemittel (15) mit drei zweiten Löchern (11) bereitgestellt ist, wobei die Armmittel (8) und die Löcher (10, 11) in denselben wechselseitigen Abständen angeordnet sind.

4. Vorrichtung gemäß einem der vorhergehenden Ansprüche, **dadurch gekennzeichnet, dass** die Querabmessung jedes Gehäusemittels (15) ungefähr gleich der Querabmessung des Körpermittels (7) plus zwei Mal die Dicke des ersten Bandmittels (4) sowie nochmal das Zweifache der Dicke des ersten Bandmittels (4) für jede Längsfalte ist.

5. Vorrichtung gemäß einem der vorhergehenden Ansprüche, **dadurch gekennzeichnet, dass** das Befestigungsmittel (6) mit einer Mehrzahl an nachgiebigen Mitteln (28) bereitgestellt ist, die befestigt sind an oder gebildet sind in dem entsprechenden Körpermittel (7) zwischen seinen Armmitteln (8) und/oder lateral zu dem Äußeren der Armmittel (8).

6. Vorrichtung gemäß einem der Ansprüche 1 bis 4, **dadurch gekennzeichnet, dass** das Körpermittel (7) des Befestigungsmittels (6) nachgiebig und gebogen ist, wobei die Seite mit dem Armmittel (8) konkav oder konvex geformt ist.

7. Vorrichtung gemäß einem der vorhergehenden Ansprüche, **dadurch gekennzeichnet, dass** das Körpermittel (7) jedes Befestigungsmittels (6) mit einer Mehrzahl an ersten Verriegelungsmitteln (19) bereitgestellt ist sowie dadurch, dass die Vorrichtung (1) einen Satz an Verbindungsmitteln (20) aufweist, die jeweils mit einer Mehrzahl von zweiten Verriegelungsmitteln (21) bereitgestellt sind, von denen jedes komplementär geformt ist zu und verriegelbar ist mit einem entsprechenden ersten Verriegelungsmittel (19) eines Befestigungsmittels (6), und die Vorrichtung (1) umfasst einen Satz an mit Fransen besetzten zweiten Bandmitteln (22), die jeweils bereitgestellt sind mit einer Mehrzahl an dritten Löchern (23), jeweils für ein entsprechendes zweites Verriegelungsmittel (21) eines Verbindungsmittels (20).

8. Vorrichtung gemäß Anspruch 7, **dadurch gekennzeichnet, dass** jedes erste Verriegelungsmittel (19) aus einem Hohlraum mit einem inneren Hinterschnitt besteht, der zugeordnet ist, um mit einer vorstehende Schulter mittels Klick-Verbindung in Eingriff zu stehen, die in einer Stange eines zweiten Verriegelungsmittels (21) ausgeführt ist.

## Revendications

1. Dispositif à brosse pour lavage mécanique comprenant un moyen de support souple (3) qui peut être fixé à un rouleau respectif pour recouvrir la surface cylindrique dudit rouleau, et comprenant une pluralité de premiers moyens de bande (4) munis chacun de franges ; ledit dispositif comprend une pluralité de moyens de fixation (6) chacun agencés pour fixer au moins un des premiers moyens de bande (4) au moyen de support (3), et chacun desdits moyens de fixation (6) est muni d'un moyen de corps allongé (7) ayant au moins un moyen de bras en saillie (8) ; dans l'état assemblé du dispositif (1), le moyen de corps (7) d'un moyen de fixation (6) est agencé pour correspondre à la partie médiane transversale (5) d'un premier moyen de bande correspondant (4) et chaque moyen de bras (8) dudit moyen de corps (7) est agencé pour engager un premier trou traversant respectif (10) réalisé à travers ladite partie médiane transversale (5) dudit premier moyen de bande (4) et pour engager un deuxième trou traversant respectif (11) réalisé à travers le moyen de support (3) ; dans lequel, dans ledit état assemblé, chaque moyen de bras (8) de chaque moyen de fixation (6) est verrouillé au moyen de support (3) ; le dispositif étant **caractérisé par le fait que** le moyen de support souple (3) est muni d'une pluralité de logements (15) ayant chacun une paroi périphérique (16) faisant saillie perpendiculairement au moyen de support (3) et agencé pour recevoir la partie médiane transversale (5) d'au moins un premier moyen de bande (4) et pour recevoir un moyen de corps correspondant (7) ; chaque logement (15) est également muni d'un deuxième trou (11) pour chaque moyen de bras (8) du moyen de corps (7) ; le côté du moyen de corps (7) opposé au moyen de bras (8) a un ensemble de concavités (18) agencées pour recevoir de façon amovible des dents respectives d'un moyen de poussée pour pousser le moyen de bras (8) dans les premier (10) et deuxième (11) trous et pour déplacer en translation le moyen de corps (7) et la partie médiane transversale (5) du premier moyen de bande (4) vers et contre le fond du moyen de logement (15) aussi longtemps que la fixation du moyen de bras (8) au moyen de support (3) est réalisée.

2. Dispositif selon la revendication 1, **caractérisé par le fait que** l'extension longitudinale de chaque moyen de corps (7) est égale ou presque égale à la dimension transversale d'un premier moyen de bande (4) ou à des multiples ou sous-multiples entiers de ladite dimension, et par le fait qu'il comprend une pluralité de moyens de bras en saillie (8) s'étendant sur le même plan géométrique passant à travers l'axe géométrique longitudinal du moyen de corps (7) ou à proximité de celui-ci.

3. Dispositif selon la revendication 1, **caractérisé par le fait que** le moyen de corps (7) de chaque moyen de fixation (6) a une forme prismatique ou cylindrique et il (7) est muni de trois moyens de bras (8), la partie médiane transversale (5) de chaque premier moyen de bande (4) est munie de trois premiers trous (10) et, éventuellement, de trois autres premiers trous (10) pour chaque pli longitudinal de celui-ci, chaque moyen de logement (15) est muni de trois deuxièmes trous (11), lesdits moyens de bras (8) et lesdits trous (10, 11) étant placés aux mêmes distances mutuelles.

4. Dispositif selon l'une quelconque des revendications précédentes, **caractérisé par le fait que** la dimension transversale de chaque moyen de logement (15) est approximativement égale à la dimension transversale du moyen de corps (7) plus deux fois l'épaisseur du premier moyen de bande (4) plus de deux fois l'épaisseur du premier moyen de bande (4) pour chaque pli longitudinal.

5. Dispositif selon l'une quelconque des revendications précédentes, **caractérisé par le fait que** le moyen de fixation (6) est muni d'une pluralité de moyens élastiques (28) fixés au ou formés dans le moyen de corps respectif (7) entre ses moyens de bras (8) et/ou latéralement par rapport à l'extérieur de ceux-ci (8).

6. Dispositif selon l'une quelconque des revendications 1 à 4, **caractérisé par le fait que** le moyen de corps (7) du moyen de fixation (6) est élastique et est incurvé, avec la face ayant ses moyens de bras (8) qui est de forme concave ou convexe.

7. Dispositif selon l'une quelconque des revendications précédentes, **caractérisé par le fait que** le moyen de corps (7) de chaque moyen de fixation (6) est muni d'une pluralité de premiers moyens de verrouillage (19) et **par le fait que** ledit dispositif (1) comprend un ensemble de moyens de liaison (20) munis chacun d'une pluralité de seconds moyens de verrouillage (21), chacun de forme complémentaire et apte à être verrouillé à un premier moyen de verrouillage respectif (19) d'un moyen de fixation (6), et le dispositif (1) comprend un ensemble de seconds moyens de bande à franges (2), munis chacun d'une pluralité de troisièmes trous (23) chacun pour un second moyen de verrouillage respectif (21) d'un moyen de liaison (20).

8. Dispositif selon la revendication 7, **caractérisé par le fait que** chaque premier moyen de verrouillage (19) consiste en une cavité ayant une encoche interne agencée pour engager par encliquetage un épaulement en saillie réalisé dans une tige d'un second moyen de verrouillage (21).
